# EUROPÄISCHE PATENTANMELDUNG

(11) **EP 1 001 234 A2**
(43) Veröffentlichungstag der Anmeldung: **17.05.2000**
(21) Anmeldenummer: 99122459.3
(22) Anmeldetag: 11.11.1999
(51) Int. Cl.: F25D 23/06, E04C 2/52

(54) **Bauelement, insbesondere Wandelement, zur Klimatisierung von Räumen**

(30) Priorität: 11.11.1998 DE 19852063
(71) Anmelder: Franz Carl Nüdling Basaltwerke GmbH & Co. KG, D-36037 Fulda (DE)
(72) Erfinder: Klöppner, Bernhard, 36124 Eichenzell (DE); Schmidt, Thomas, Dr., 36037 Fulda (DE); Rübsam, Roland, 36037 Fulda (DE)
(74) Vertreter: Möller, Friedrich, Dipl.-Ing.

(57) **Zusammenfassung**

Bauelemente, und zwar insbesondere Wandelemente (10), die gleichzeitig zur Klimatisierung von Räumen dienen, werden wegen des angenehmen Raumklimas, das sie schaffen, in zunehmendem Maße eingesetzt. Bekannte Wandelemente (10) dieser Art sind verhältnismäßig aufwendig. Vor allem besteht insbesondere bei ihrer Montage die Gefahr, daß ein als Energieträger dienendes Fluid führende Rohrleitungen (26, 27) beschädigt werden.

Das erfindungsgemäße Wandelement (10) verfügt über ein Wandteil (17) mit Hohlräumen (18) zur Aufnahme der Rohrleitungen (26, 27), wobei in den Hohlräumen (18) eine zusätzliche Umhüllung der Rohrleitungen (26, 27) in Form von Innenmäntel (34) vorgesehen ist. Die Rohrleitungen (26, 27) des Wandelements (10) sind dadurch in einer Doppelschale untergebracht, die einen mehrfachen Schutz derselben gegen Beschädigungen gewährleistet.

## Beschreibung

Die Erfindung betrifft ein Bauelement, insbesondere ein Wandelement, zur Klimatisierung von Räumen gemäß dem Oberbegriff des Anspruchs 1, 8 bzw. 15.

Bauelemente, und zwar insbesondere Wandelemente, aber auch Deckenelemente, werden in zunehmendem Maße zur Klimatisierung von Räumen eingesetzt. Die Wand- oder Deckenelemente können dabei je nach Bedarf zum Heizen oder Kühlen von Räumen eingesetzt werden. Die Bauelemente ersetzen dabei separate Heizkörper bzw. Klimaanlagen. Der hiervon beanspruchte Platzbedarf ist bei den hier angesprochenen Bauelementen zur Klimatisierung von Räumen nicht erforderlich. Darüber hinaus hat der Einsatz von Wand- oder Deckenelementen zum Klimatisieren von Räumen den Vorteil, daß große Wärmeübertragungsflächen zur Verfügung stehen, die es ermöglichen, mit einem verhältnismäßig geringen Temperaturgefälle die Räume zu heizen oder zu kühlen. Eine solche Klimatisierung schafft ein angenehmes und gesundes Raumklima.

Es sind verschiedene Bauelemente, insbesondere Wandelemente, bekannt, die überwiegend zum Heizen von Räumen eingesetzt werden. Diese verfügen über einen relativ aufwendigen Aufbau und sind mithin teuer. Außerdem besteht die Gefahr, daß Rohrleitungen zum Transport eines als Energieträger dienenden Fluids im Wandelement durch Installationsarbeiten, das Einschlagen von Nägeln in die Wand oder dergleichen beschädigt werden.

Hiervon ausgehend liegt der Erfindung die Aufgabe zugrunde, ein Bauelement, insbesondere Wandelement, zum Klimatisieren von Räumen zu schaffen, das einen einfachen Aufbau aufweist und bei dem die Gefahr von Beschädigungen insbesondere fluidführender Rohrleitungen mindestens verringert ist.

Ein zur Lösung der genannten Aufgabe dienendes Bauelement weist die Merkmale des Anspruchs 1 auf. Dadurch, daß die Rohrleitungen in Hohlräumen eines Plattenteils des Bauelements eingebettet sind, sind sie zusätzlich geschützt. Die Einbettung der Rohrleitungen kann in den Hohlräumen auf einfachste Weise erfolgen, weil die ohnehin erforderlichen Hohlräume gleichzeitig als Schalung für das zur Einbettung der Rohrleitungen verwendete Material dienen. Die Einbettung der Rohrleitungen in den Hohlräumen kann dabei mit einem Material erfolgen, das gegen mechanische Beeinträchtigungen hoch widerstandsfähig ist, so daß bei Installationsarbeiten oder beim Einschlagen eines Nagels in das Bauelement das Material zur Einbettung der Rohrleitungen nicht in einem solchen Maße angegriffen werden kann, daß daraus eine Beschädigung mit Undichtigkeiten der Rohrleitungen resultiert.

Vorzugsweise erfolgt die Einbettung der Rohrleitungen in den Hohlräumen derart, daß sie mit einer Umhüllung versehen werden, die die von den Rohrleitungen freigelassenen Bereiche in den Hohlräumen mindestens teilweise, vorzugsweise vollständig, ausfüllt. Dadurch läßt sich eine die Rohrleitungen vollständig umgebende Umhüllung bilden, die die Rohrleitungen allseitig zuverlässig schützt.

Gemäß einer bevorzugten Ausbildung des Wandelements sind in einzelnen und vorzugsweise allen Hohlräumen mehrere, insbesondere zwei Rohrleitungen bzw. Strömungskanäle angeordnet. Dadurch läßt sich in den Hohlräumen sowohl eine Vorlaufleitung als auch eine Rücklaufleitung für das zum Heizen oder Kühlen dienende Fluid unterbringen. Zum Anschluß an Fluidzuflüsse und -abflüsse dienende Enden der Rohrleitungen brauchen auf diese Weise nur aus einer offenen Stirnseite des betreffenden Hohlraums herausgeführt zu werden.

Es ist weiterhin vorgesehen, die freien Enden der Rohrleitungen aus den Hohlräumen, vorzugsweise allen Hohlräumen, auf einer Seite, insbesondere einem Querrandbereich des Bauelements, bzw. des Plattenteils desselben, herauszuführen. Das vereinfacht den Anschluß der Enden der Rohrleitungen an Verbindungsleitungen zur Zufuhr und zur Ableitung des zur Klimatisierung dienenden Fluids.

Zweckmäßigerweise sind alle aus den Hohlräumen des Plattenteils herausragenden Enden der zum Fluidvorlauf dienenden Rohrleitungen mit einer Verbindungsleitung verbunden, die sich längs durch den Querrandbereich des Bauelements erstreckt. Ebenso sind alle Enden der zum Fluidrücklauf dienenden Rohrleitungen mit einer Verbindungsleitung verbunden.

Die Verbindungsleitungen im Querrandbereich des Bauelements erstrecken sich quer durch das gesamte Bauelement, und zwar so weit, daß ihre gegenüberliegenden Enden von den Längskanten her zugänglich sind. Vorzugsweise ist mindestens ein Ende jeder Verbindungsleitung mit einem Verbindungselement versehen, das zur fluiddichten Verbindung zueinanderweisender Enden der Verbindungsleitungen benachbarter Wandelemente dient. Auf diese Weise kann beim Aneinandersetzen der zur Bildung einer Wand dienenden Wandelemente zwangsläufig ein fluiddichter Anschluß der Verbindungskanäle des einen Wandelements an die Verbindungskanäle des anderen Wandelements erfolgen.

Ein weiteres Bauelement zur Lösung der eingangs genannten Aufgabe weist die Merkmale des Anspruchs 8 auf. Dadurch, daß die Klimatisierungseinrichtung aus einer vorgefertigten Einheit aus Rohrleitungen und Verbindungsleitungen gebildet ist, kann sie vorgefertigt werden und in ein ebenfalls vorgefertigtes Plattenteil des Wandelements mit Hohlräumen zur Aufnahme der Rohrleitungen eingesetzt werden.

Eine weitere Lösung der eingangs genannten Aufgabe, bei der es sich auch um eine Weiterbildung des Bauelements mit den vorstehend erläuterten Merkmalen handeln kann, weist die Merkmale des Anspruchs 15 auf. Demnach ist jeder Verbindungsleitung eine Bypaßleitung zugeordnet, die sowohl im Baumelement bzw. Wandelement angeordnet sein kann, aber auch ganz oder teilweise sich außerhalb des Bau- oder Wandelements befinden kann. Die jeweilige Bypaßleitung umgeht die Anschlüsse der Rohrleitungen in den Hohlräumen an die Verbindungsleitungen. An gegenüberliegenden Endbereichen der Verbindungsleitung ist vorzugsweise die ihr zugeordnete Bypaßleitung an die Verbindungsleitung angeschlossen. Diesen Anschlußstellen sind vorzugsweise Schaltelemente zugeordnet. Damit ist es möglich, das als Energieträger dienende Fluid wahlweise durch die Verbindungsleitungen oder Bypaßleitungen strömen zu lassen. Strömt das als Kälte- oder Wärmträger dienende Fluid durch die Bypaßleitungen, werden die Rohrleitungen in den Hohlräumen des Wandelements nicht vom Fluid durchströmt, so daß mit dem betreffenden Wandelement keine Klimatisierung erfolgt. Auf diese Weise kann die Raumheizung oder -kühlung geregelt werden, indem nicht mit allen Wandelementen, sondern nur mit ausgewählten Wandelementen, eine Kühlung oder Heizung erfolgt. Wird hingegen der Durchfluß des Fluids durch die Bypaßleitungen unterbrochen, strömt das Fluid durch die Rohrleitungen in den Hohlräumen des Wandelements, so daß dieses zur Raumheizung oder -kühlung dient.

Gemäß einer weiteren Ausgestaltung des Wandelements ist vorgesehen, daß gegenüberliegenden Ecken des Plattenteils, und zwar im Querrandbereich, Ausnehmungen zugeordnet sind. Diese Ausnehmungen sind derart ausgebildet, daß gegenüberliegende Endbereiche der Verbindungsleitungen und vorzugsweise auch die Anschlußstellen der Bypaßleitung an die Verbindungsleitungen, mindestens teilweise freiliegen, was das Zusammenstecken der Endbereiche der Verbindungsleitungen benachbarter Wandelemente bei ihrer Montage erleichtert. Des weiteren sind auf diese Weise Schaltelemente an den Verbindungsstellen der Verbindungsleitung mit den Bypaßleitungen zu Betätigungszwecken zugänglich. Es ist denkbar, die Ausnehmungen nach dem Zusammensetzen der Wandelemente zur Bildung der Wand auszufüllen, insbesondere auszugießen. Die dann nicht mehr frei zugänglichen Schaltelemente an den Abzweigungen der Bypaßleitungen von den Verbindungsleitungen werden in einem solchen Falle fernbedient, und zwar beispielsweise durch Funksignale.

Bevorzugte Ausführungsbeispiele von erfindungsgemäßen Wandelementen werden nachfolgend anhand der Zeichnung näher erläutert. In dieser zeigen:
- Fig. 1: eine perspektivische Ansicht eines teilweise fertiggestellten Wandelements,
- Fig. 2: das Wandelement der Fig. 1 in einem mittigen Vertikalschnitt,
- Fig. 3: eine vergrößerte perspektivische Einzelheit eines oberen Teils des Wandelements der Fig. 1,
- Fig. 4: einen horizontalen Querschnitt durch das Wandelement entlang der Linie III-III in der Fig. 1,
- Fig. 5: einen horizontalen Querschnitt analog zur Fig. 4 mit Rohrleitungen nach einem alternativen Ausführungsbeispiel der Erfindung,
- Fig. 6: eine Draufsicht auf das in der Fig. 1 gezeigte Wandelement,
- Fig. 7: eine perspektivische Ansicht oberer Bereiche zweier zusammengesetzter Wandelemente,
- Fig. 8: eine perspektivische Ansicht eines alternativen Ausführungsbeispiels eines Wandelements,
- Fig. 9: das Wandelement der Fig. 8 in einem mittigen Vertikalschnitt, und
- Fig. 10: eine Draufsicht auf benachbarte Randbereiche zweier nebeneinanderliegender Wandelemente.

Die hier gezeigten Wandelemente 10 sind zur Klimatisierung, nämlich zum Heizen und/oder Kühlen, von Räumen ausgebildet. Mehrere solcher aneinandergesetzten Wandelemente 10 dienen zur Bildung von Wänden, wobei zum Erhalt einer entsprechenden Raumgröße unterschiedlich große Wandelemente 10 zusammengesetzt werden können. Die Wandelemente 10 können in ihrer Größe voneinander abweichen. Ihr Aufbau, und zwar insbesondere hinsichtlich der Ausbildung zum Heizen bzw. Kühlen von Räumen (Klimatisierungseinrichtung), ist hingegen prinzipiell gleich.

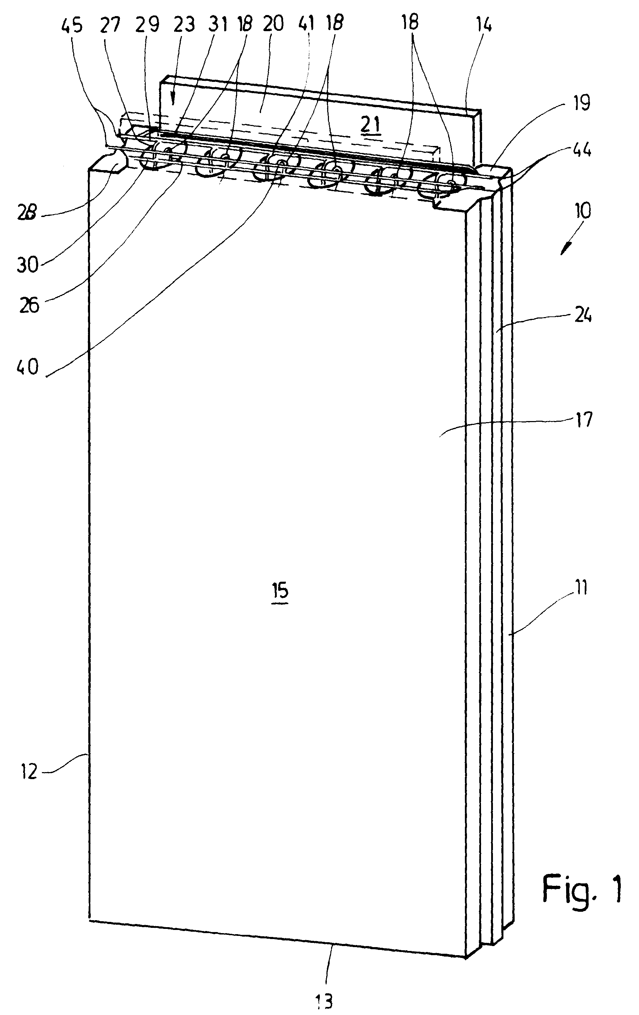

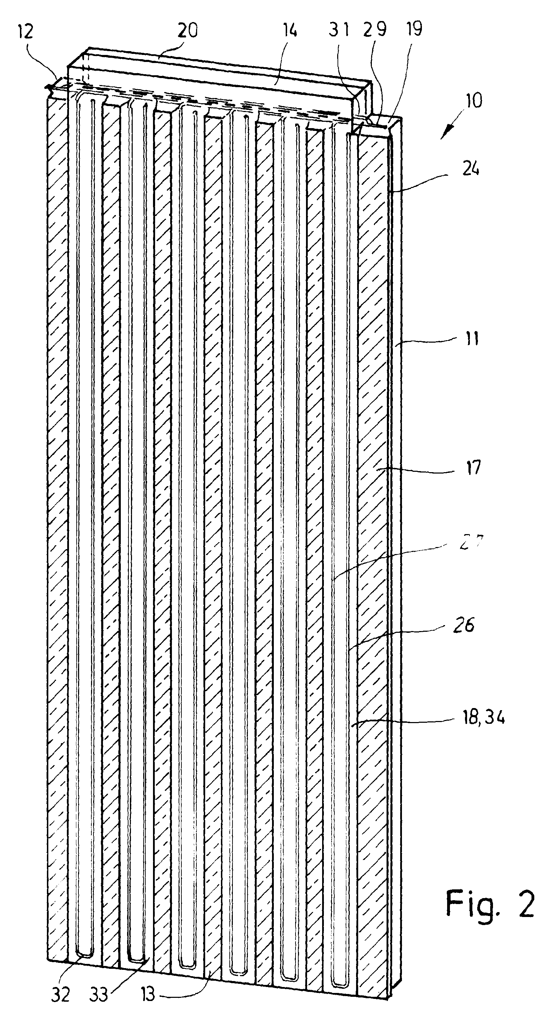

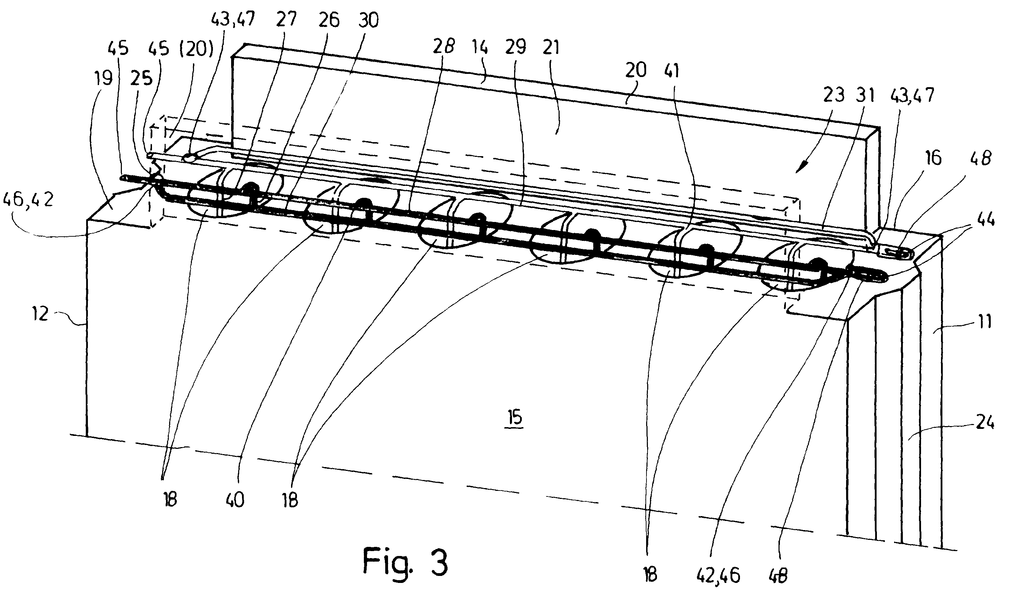

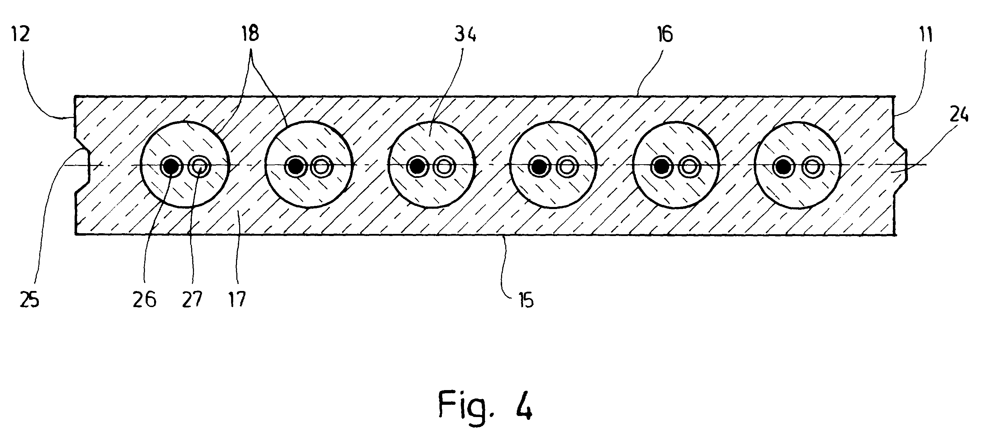

Die Fig. 1 bis 6 zeigen jeweils ein einzelnes Wandelement 10, und zwar zum Teil in einem noch nicht vollständig fertiggestellten Zustand, um die Klimatisierungseinrichtung im Inneren des Wandelements 10 besser zu veranschaulichen. Anhand der genannten Figuren wird zunächst der Aufbau des einzelnen Wandelements 10 erläutert.

Das Wandelement 10 ist plattenförmig ausgebildet und verfügt über eine rechteckförmige Grundfläche. Die Höhe des Wandelements 10 entspricht wie üblich der Raumhöhe. Die Breite des Wandelements 10 ist so gewählt, daß es handhabbar ist. Dadurch verfügt das Wandelement 10 über lange, senkrechte Längsränder 11 und 12 und demgegenüber kürzere, horizontale Querränder 13 und 14. Die genannten Ränder umgeben jeweils eine rechteckige vordere Wandfläche 15 und eine hintere Wandfläche 16. Die Dicke des Wandelements 10 entspricht derjenigen von üblichen Innen- bzw. Trennwänden.

Das Wandelement 10 setzt sich im wesentlichen zusammen aus einem Wandteil 17 und der darin eingebetteten Klimatisierungseinrichtung. Das die äußere Gestalt des Wandelements 10 vorgebende Wandteil 17 ist als einstückiges Betonfertigteil gebildet. Das Betonfertigteil besteht vorzugsweise vollständig aus einem einheitlichen Material, und zwar vorzugsweise Leichtbeton. Je nach Anwendungsfall kann das Betonfertigteil aber auch aus einem anderen Spezialbeton oder Normalbeton bestehen. Zur Erhöhung der Stabilität können übliche Bewehrungseisen in Längsrichtung des Betonfertigteils angeordnet sein.

Das Wandteil 17 verfügt im Inneren über mehrere Hohlräume 18. Die Hohlräume 18 sind im gezeigten Ausführungsbeispiel zylindrisch ausgebildet. Sie verlaufen in senkrechter Richtung durch das Wandteil 17. Das gezeigte Wandelement 10 verfügt über sechs gleich ausgebildete Hohlräume 18. Es kann aber auch eine größere oder kleinere Anzahl von Hohlräumen 18 im Wandelement 10 vorgesehen sein. Das gilt vor allem für Wandteile, die größer oder kleiner als das hier gezeigte Wandteil 17 ausgebildet sind. Die Hohlräume 18 sind derart im Wandelement 10 untergebracht, daß ihre Längsmittelachsen mit gleichmäßigen Abständen parallel zueinander verlaufend auf einer gemeinsamen (gedachten) vertikalen Längsmittelebene des Wandteils 17 liegen. Die Hohlräume 18 befinden sich dadurch mittig im Wandelement 10. Es ist aber auch denkbar, die Hohlräume 18 außermittig im Wandelement anzuordnen, und zwar vorzugsweise so, dass sie von der vorderen Wandfläche 15 einen kleineren Abstand aufweisen als von der hinteren Wandfläche 16. Die Hohlräume 18 verlaufen dann in einer außermittigen Längsmittelebene durch das Wandelement 10. Die Hohlräume 18 sind so im Wandteil 17 eingebettet, daß sie vollständig vom Material des Wandteils 17 umgeben sind. Sowohl untere als auch die oberen Stirnseiten aller Hohlräume 18 sind offen. Die unteren Stirnseiten der Hohlräume 18 liegen in der Ebene des unteren Querrands 13. Hingegen liegen die oberen offenen Stirnseiten aller Hohlräume 18 in einer gegenüber dem oberen Querrand 14 des Wandteils 17 zurückversetzten Zwischenebene 19. Diese Zwischenebene 19 verläuft mit geringem Abstand parallel zum oberen Querrand 14.

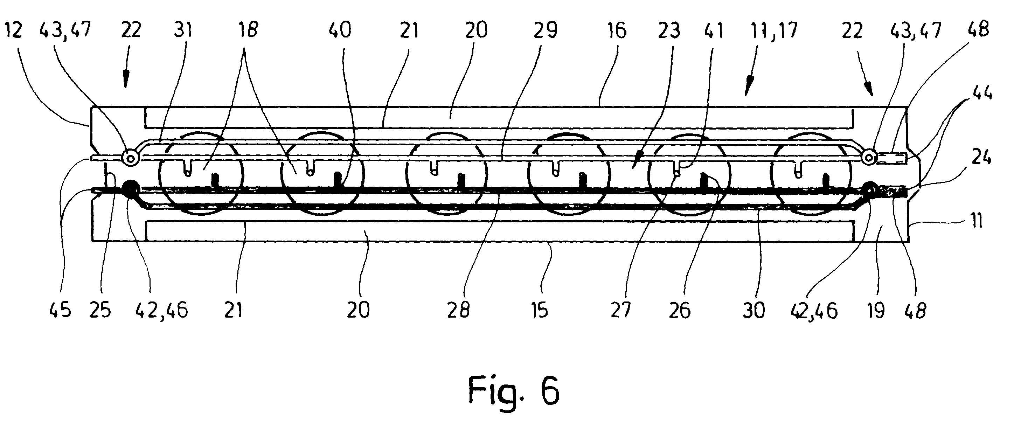

In einem Teilbereich zwischen dem oberen Querrand 14 und der darunterliegenden Zwischenebene 19 weist das Wandteil 17 des gezeigten Ausführungsbeispiels zwei parallele Aufkantungen 20 oder dergleichen auf. Bei den Aufkantungen 20 handelt es sich vorzugsweise um dünne Wandungsabschnitte, deren Außenwandungen Teile der Wandfläche 15 bzw. 16 bilden. Innenwandungen 21 der Aufkantungen 20 verlaufen parallel zu den Wandflächen 15 und 16, und zwar derart, daß sie die oberen offenen Stirnseiten der Hohlräume 18 freilassen (Fig. 6). Die Aufkantungen 20 erstrecken sich nur über einen Teil der Länge des Querrands 13, enden nämlich mit geringem Abstand vor beiden Längsrändern 11 und 12 des Wandelements 10. Obere Eckbereiche des Wandelements 10 sind dadurch von den Aufkantungen 20 freigelassen. Zwischen den Innenwandungen 21 der gegenüberliegenden Aufkantungen 20 und der Zwischenebene 19 wird im oberen Querrandbereich 22 des Wandelements 10 ein zwischen den Längsrändern 11 und 12 durchgehender Freiraum 23 geschaffen. Abweichend vom vorstehend beschriebenen Ausführungsbeispiel kann der Querrand 14 auch verschiedene alternative Gestaltungen aufweisen.

Beide Längsränder 11 und 12 des Wandelements 10 sind profiliert. Während ein Längsrand 11 mit einer mittigen und über die gesamte Länge des Längsrands 11 durchgehenden Feder 24 versehen ist, weist der gegenüberliegende Längsrand 12 in der Mitte eine ebenfalls durchgehende Nut 25 auf. Die Feder 24 und die Nut 25 verfügen über ein korrespondierendes Profil, das im gezeigten Ausführungsbeispiel trapezartig ausgebildet ist.

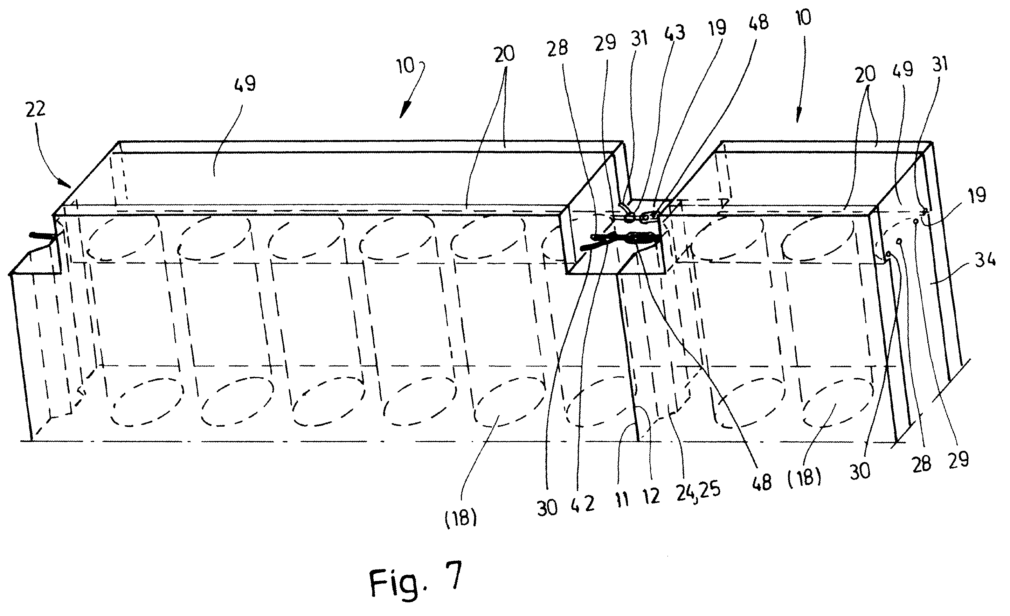

Die im Wandteil 17 des Wandelements 10 angeordnete Klimatisierungseinrichtung setzt sich im wesentlichen aus senkrechten Rohrleitungen 26, 27, horizontalen Verbindungsleitungen 28 und 29 sowie dazu parallelen Bypaßleitungen 30, 31 zusammen. Im Ausführungsbeispiel der Fig. 1 bis 4, 6 und 7 sind in jedem Hohlraum 18 des Wandteils 17 zwei Rohrleitungen 26 und 27 angeordnet. Die Rohrleitungen 26 und 27 verlaufen parallel zueinander nahezu über die gesamte Länge der Hohlräume 18. An kurz vor den im unteren Querrand 13 des Wandteils 17 mündenden Stirnseiten der Hohlräume 18 sind die Enden der Rohrleitungen 25 und 27 durch eine kurze, horizontale Zwischenleitung 32 U-förmig miteinander verbunden. Auf diese Weise kann das durch die zum Vorlauf dienende Rohrleitung 26 im jeweiligen Hohlraum 18 abwärts fließende Fluid über die parallel dazu verlaufende und als Rücklauf dienende Rohrleitung 27 aufwärts gerichtet zurückfließen. Strömungstechnisch bilden also die beiden parallelen Rohrleitungen 26 und 27 in jedem Hohlraum 18 einen U-förmigen Strömungspfad für das zum Heizen oder Kühlen dienende Fluid im Wandelement 10.

Obere Endbereiche 33 der Rohrleitungen 26 und 27 sind über die oben offenen Stirnseiten der Hohlräume 18 aus denselben herausgeführt, so daß diese Endbereiche 33 der Rohrleitungen 26 und 27 über die Zwischenebene 19 hinaus nach oben in den Querrandbereich 22 ragen.

Die Rohrleitungen 26 und 27 sind derart in den Hohlräumen 18 angeordnet, daß sie sich weder untereinander noch die Wandungen der Hohlräume 18 berühren. Die von den Rohrleitungen 26 und 27 in den Hohlräumen 18 freigelassenen Bereiche sind nachträglich, das heißt nach dem Einbringen der Rohrleitungen 26 und 27 in die Hohlräume 18, vorzugsweise vollständig verfüllt, und zwar mit einer Vergußmasse. Diese Vergußmasse bettet die Rohrleitungen 26 und 27 in den Hohlräumen 18 ein. Da die Rohrleitungen 26 und 27 untereinander und mit den Wandungen der Hohlräume 18 nicht in Verbindung stehen, bildet das Vergußmaterial eine geschlossene Umhüllung in Gestalt eines Innenmantels 34 um jede Wandung der Rohrleitungen 26 und 27. Die Rohrleitungen 26 und 27 sind somit einmal vom Material des Wandteils 17 und zum anderen von der Vergußmasse umgeben. Dadurch sind die Rohrleitungen 26 und 27 im Wandelement 10 doppelt, nämlich sozusagen zweischalig, geschützt. Zum wirksameren Schutz der Rohrleitungen 26 und 27 gegen insbesondere äußere mechanische Einflüsse wird als Vergußmaterial ein nach dem Aushärten hochfester Mörtel oder dergleichen verwendet. Dieser Mörtel kann auch faserverstärkt sein. Es ist auch denkbar, in die Hohlräume 18 vor dem Einsetzen der Rohrleitungen 26 und 27 ein schlauchförmiges Vlies oder eine rohrförmige Bewehrung einzusetzen, die die Festigkeit des die Rohrleitungen 26 und 27 umgebenden Innenmantels 34 erhöht. Des weiteren kann das Vergußmaterial mit einer vom Material des Wandteils 17 abweichenden Färbung versehen sein, die als Indikator beim Bohren in die Wand dient, indem eine Verfärbung des Bohrstaubs anzeigt, daß der Innenmantel 34 der Rohrleitungen 26 und 27 erreicht ist und daraufhin der Bohrvorgang unterbrochen wird, bevor der Bohrer eine Rohrleitung 26, 27 beschädigt hat.

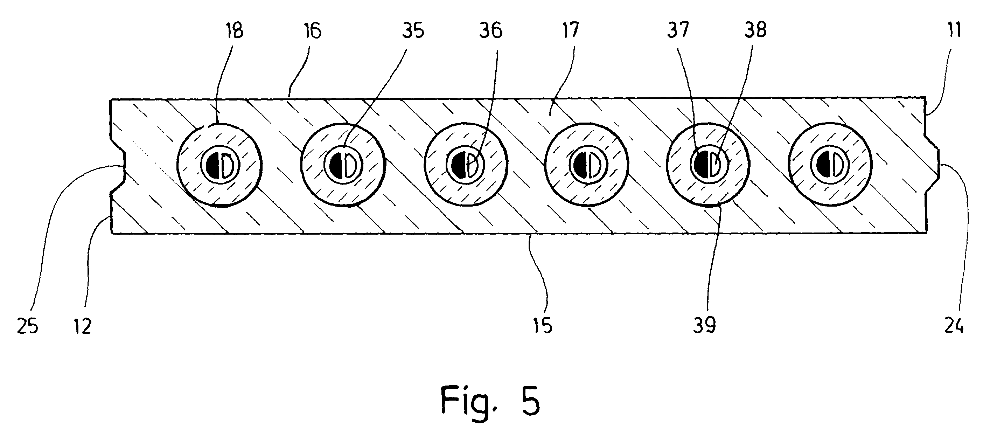

Die Fig. 5 zeigt eine Abwandlung gegenüber den Fig. 1 bis 4, 6 und 7, die darin besteht, daß in jedem Hohlraum 18 an der Stelle zweier paralleler Rohrleitungen 26, 27 nur eine einzige, zylindrische Rohrleitung 35 angeordnet ist. Diese Rohrleitung 35 ist mittig unterteilt durch eine Trennwand 36 zur Bildung zweier getrennter paralleler Strömungskanäle 37, 38, wobei der Strömungskanal 37 als Vorlauf und der Strömungskanal 38 als Rücklauf für das Fluid zum Heizen bzw. Kühlen dient. Am unteren Ende, nahe der Stirnseiten der Hohlräume 18 am unteren Querrand 13, sind die Strömungskanäle 37 und 38 der Rohrleitung 35 miteinander in geeigneter Weise verbunden, damit das Fluid im zum Vorlauf dienenden Strömungskanal 37 am unteren Ende des Wandelements 10 überströmen kann in den zum Rücklauf dienenden Strömungskanal 38.

Die Rohrleitung 35 weist - wie die Rohrleitungen 26 und 27 - einen Außendurchmesser auf, der kleiner ist als der Durchmesser des jeweiligen Hohlraums 18. Darüber hinaus ist die Rohrleitung 35 konzentrisch im zylindrischen Hohlraum 18 angeordnet, wodurch ein kreisringförmiger Zwischenraum zwischen der Wandung des jeweiligen Hohlraums 18 und der darin angeordneten Rohrleitung 35 entsteht, der wiederum ausgefüllt ist durch ein Vergußmaterial, das die Rohrleitung 35 nach Art einer Umhüllung vollständig umgibt zur Bildung eines zylindrischen Innenmantels 39 um die Rohrleitung 35. Als Vergußmaterial findet ein solches Verwendung, das im Zusammenhang mit dem Innenmantel 34 für die Rohrleitungen 25 und 27 beschrieben ist und gegebenenfalls auch verstärkt oder bewehrt sein kann.

Die aus den Hohlräumen 18 nach oben über die Zwischenebene 19 herausgeführten Enden der Rohrleitungen 26 und 27 sind mit den Verbindungsleitungen 28, 29 strömungstechnisch verbunden, also an diese angeschlossen. Alle den Vorlauf bildenden Rohrleitungen 26 sind mit einer ebenfalls zum Vorlauf dienenden Verbindungsleitung 28 durch Anschlußstellen 40 verbunden. Ebenso sind alle zum Rücklauf dienenden Rohrleitungen 27 mit Anschlußstellen 41 an die zum Rücklauf dienende, separate Verbindungsleitung 29 angeschlossen. Durch diese Art der Ausbildung der Klimatisierungseinrichtung wird erreicht, daß das in die zum Vorlauf dienende Verbindungsleitung 28 einfließende Fluid durch die strömungstechnisch innerhalb des jeweiligen Wandelements 10 parallel geschalteten Rohrleitungen 26 für den Vorlauf strömt und am unteren Endpunkt der Rohrleitungen 26 über die Zwischenleitungen 32 in die Rohrleitungen 27 für den Rücklauf einströmt. Von hieraus fließt das Fluid zurück zur Verbindungsleitung 29 für den Rücklauf. Auf diese Weise strömt das Fluid über die gesamte Länge jedes Hohlraums 18 von oben nach unten und wieder zurück nach oben durch das Wandelement 10.

Die jeder Verbindungsleitung 28 und 29 zugeordnete Bypaßleitung 30, 31 verläuft parallel zu einem größten Teil der jeweiligen Verbindungsleitung 28 und 29. In der Länge sind die Bypaßleitungen 30 und 31 so bemessen, daß sie alle Anschlußstellen 40 und 41 der Rohrleitungen 26, 27 an den Verbindungsleitungen 28, 29 überbrücken. Vor der ersten Anschlußstelle 40, 41 und hinter der letzten Anschlußstelle 40, 41 ist die jeweilige Bypaßleitung 30, 31 an die entsprechende Verbindungsleitung 28, 29 angeschlossen zur Bildung von Abzweigstellen 42, 43 der Bypaßleitungen 30, 31 von den Verbindungsleitungen 28, 29. Die Abzweigstellen 42, 43 befinden sich mit geringem Abstand vor den offenen Enden 44, 45 der Verbindungsleitungen 28, 29 (Fig. 6). Mindestens einer Abzweigstelle 42, 43 zwischen jeweils einer Verbindungsleitung 28 bzw. 29 und der ihr zugeordneten Bypaßleitung 30 bzw. 31 ist ein Schaltelement 46, 47 zugeordnet. Im gezeigten Ausführungsbeispiel verfügen alle Abzweigstellen 42, 43 über ein Schaltelement 46, 47. Die gleich ausgebildeten Schaltelemente 46 und 47 sind vorzugsweise als 3/2 Wegeventile ausgebildet, die den Fluidstrom entweder durch die Verbindungsleitung 28 bzw. 29 oder die Bypaßleitung 30 bzw. 31 leiten. Die Betätigung der Schaltelemente 46, 47 erfolgt vorzugsweise ferngesteuert (zum Beispiel durch Funksignale oder dergleichen) oder manuell. Besonders geeignet ist die ferngesteuerte Betätigung der Schaltelemente 46, 47, weil diese dann nämlich vollständig im Wandelement 10 eingebettet sein können.

Die offenen Enden 44 und 45 der Verbindungsleitung 28, 29 enden etwa in der Ebene der Längsränder 11, 12 des Wandelements 10. Die offenen Enden 44, 45 befinden sich dabei in einem mittleren Bereich des Wandelements 10, nämlich in den Bereichen der Feder 24 einerseits und der Nut 25 andererseits, wobei die offenen Enden 44, 45 im Bereich der Nut 25 um die Tiefe derselben frei vorstehen.

Einem Ende jeder Verbindungsleitung 28, 29, und zwar im gezeigten Ausführungsbeispiel dem der Feder 24 zugewandten Ende 44, ist ein Verbindungsmittel zugeordnet. Hierbei handelt es sich im gezeigten Ausführungsbeispiel um eine Steckmuffe 48. Beim Ineinandersetzen benachbarter Wandelemente 10 wird in die zylindrische Steckmuffe 48 jeder Verbindungsleitung 28, 29 der im Bereich der Nut 25 aus dem Wandteil 17 herausragende Endabschnitt der Verbindungsleitung 28 bzw. 29 eingeschoben und dadurch die Verbindungsleitungen 28, 29 benachbarter Wandelemente 10 zusammengekuppelt. Dadurch sind strömungstechnisch die aufeinanderfolgenden Wandelemente 10 in Reihe geschaltet. Sofern nötig, kann die Verbindung der Verbindungsleitung 28, 29 benachbarter Wandelemente 10 im Bereich der Steckmuffen 48 durch Dichtungen, Kleber oder dergleichen fluiddicht gemacht werden.

Die Rohrleitungen 26, 27, Verbindungsleitungen 28, 29, Bypaßleitungen 30, 31 und die Zwischenleitungen 32 sind aus thermoplastischem Kunststoff gebildet. Gleiches kann für die Steckmuffen 48 und die Schaltelemente 46, 47 gelten. Die gesamte Klimatisierungseinheit aus den vorstehend genannten Komponenten wird als vorgefertigte Einheit von oben in die Hohlräume 18 des üblicherweise vorgefertigten Wandteils 17 eingesetzt. Sodann werden die in den Hohlräumen 18 von den Rohrleitungen 26, 27 freigelassenen Bereiche ausgegossen mit der schon weiter oben erwähnten Vergußmasse. Danach wird ebenfalls mit einer Vergußmasse der Freiraum 23 zwischen den plattenförmigen Aufkantungen 20 oberhalb der Zwischenebene 19 ausgegossen. Dabei werden die Verbindungsleitungen 28, 29 und Bypaßleitungen 30, 31 abgedeckt, so daß auch diese vollständig im Wandelement 10 eingebettet sind. Da die Aufkantungen 20 sich nicht über den gesamten Querrandbereich 22 des Wandelements 10 erstrecken, liegen in Bereichen gegenüberliegende Endabschnitte der Verbindungsleitungen 28, 29 sowie der Bypaßleitungen 30, 31 mit den Schaltelementen 46 und den Steckmuffen 48 zur Verbindung der Verbindungsleitungen 28, 29 benachbarter Wandelemente 10 mindestens halbseitig frei. Dadurch sind die Schaltelemente 46, 47 zur manuellen Betätigung zugänglich. Durch die teilweise freiliegenden Steckmuffen 48 wird die Herstellung einer Verbindung der Verbindungsleitungen 28, 29 benachbarter Wandelemente 10 erleichtert. Gegebenenfalls können die gegenüberliegenden freien Endbereiche im Querrandbereich 22 nach dem Verbinden der Wandelemente 10 ebenfalls mit einer entsprechenden Vergußmasse ausgegossen werden zur Bildung von Querrandfüllungen 49. Dabei erfolgt gleichzeitig ein Ausfüllen zueinander gerichteter Eckbereiche benachbarter Wandelemente 10, wodurch eine zusätzliche Verbindung der Wandelemente 10 zustande kommt. Gleichzeitig erfolgt eine vollständige Einbettung der Steckmuffen 48 und der Schaltelemente 46, 47. Dadurch wird die Steckverbindung zwischen benachbarten Verbindungsleitungen 28, 29 geschützt und gesichert, und zwar ebenso wie die Schaltelemente 46, 47. Bei fertiger Wand aus mehreren Wandelementen 10 sind dann auch die Steckmuffen 48 und die Schaltelemente 46, 47 vollständig eingebettet im Inneren der Wandelemente 10.

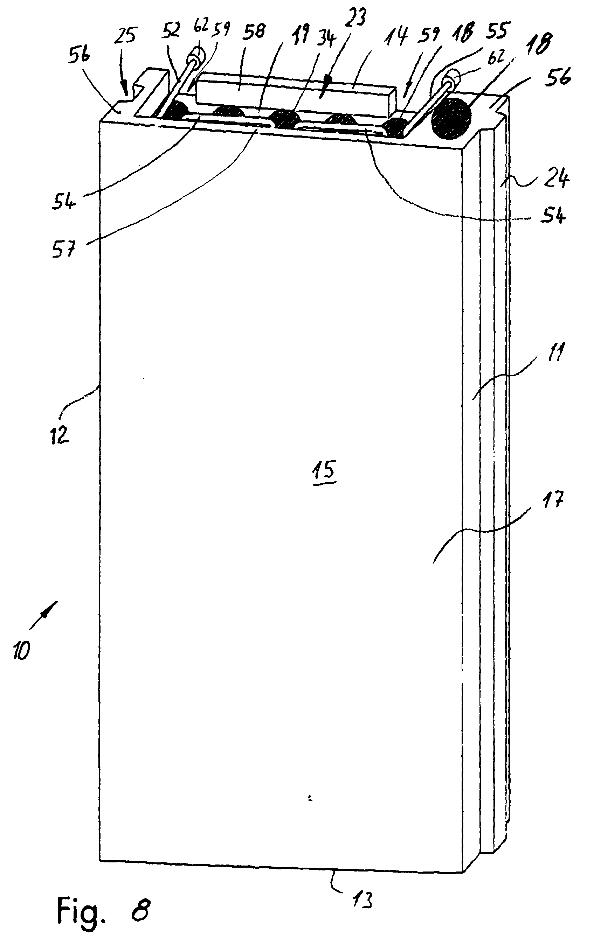

Die Fig. 8 bis 10 betreffen ein anderes Ausführungsbeispiel eines erfindungsgemäßen Wandelements 10. Das Wandelement 10 unterscheidet sich von demjenigen der vorstehend beschriebenen Ausführungsbeispiele im wesentlichen nur durch eine geänderte Klimatisierungseinrichtung. Demnach entspricht das Wandteil 17 im wesentlichen dem vorstehend beschriebenen Wandteil 17. Es wird deshalb auf die damit zusammenhängende (vorstehende) Beschreibung Bezug genommen, wobei für gleiche Teile gleiche Bezugsziffern verwendet werden.

Im Wandteil 17 der Fig. 8 bis 10 sind ebenfalls sechs in vertikaler Richtung durchgehende Hohlräume 18 angeordnet. Die Klimatisierungseinrichtung verfügt über senkrechte Rohrleitungen 50 und 51, die nur einigen Hohlräumen 18 zugeordnet sind. Im gezeigten Ausführungsbeispiel ist jedem zweiten Hohlraum 18 eine Rohrleitung 50 für den Vorlauf und eine Rohrleitung 51 für den Rücklauf zugeordnet. Es ist aber auch denkbar, jedem Hohlraum 18 Rohrleitungen 50, 51 zuzuordnen, wie das bei den zuvor beschriebenen Wandelementen 10 erfolgt. Die Hohlräume 18 werden nach dem Einsetzen der Klimatisierungseinrichtung vorzugsweise vollständig verfüllt mit insbesondere einer Vergußmasse. Dieses geschieht derart, wie es weiter oben im Zusammenhang mit dort gezeigten Ausführungsbeispielen beschrieben ist.

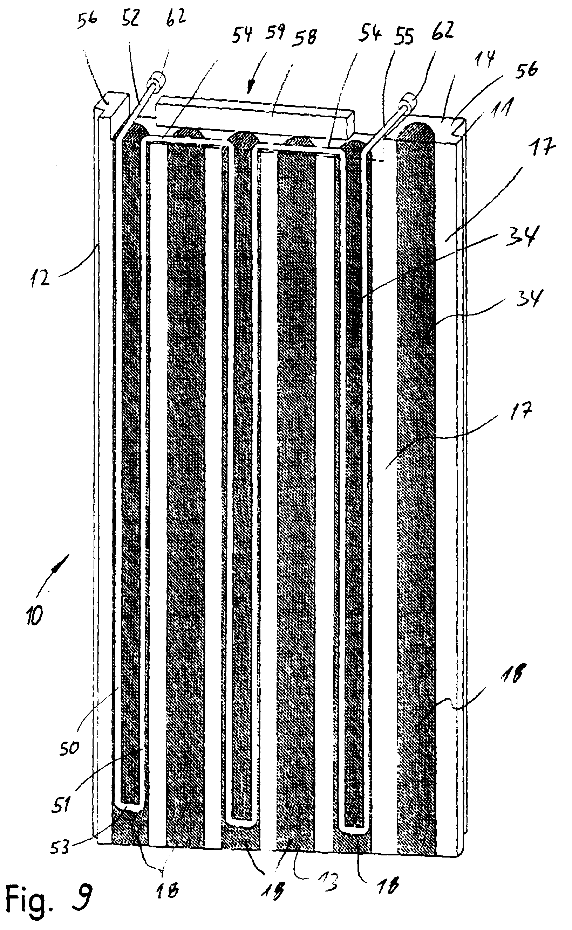

Die Rohrleitungen 50, 51 in unterschiedlichen Hohlräumen 18 sind innerhalb des Wandelements 10 in Reihe geschaltet. Die Rohrleitung 50 für den Vorlauf in einem außenliegenden Hohlraum 18 ist an ihrem oberen Ende mit einer Speiseleitung 52 versehen. Die unteren Enden der Rohrleitungen 50 und 51 sind in jedem Hohlraum 18 verbunden durch eine Zwischenleitung 53. Über die Zwischenleitung 53 gelangt die zur Klimatisierung dienende Flüssigkeit von der Rohrleitung 50 des jeweiligen Vorlaufs in die Rohrleitung 51 des jeweiligen Rücklaufs. Ein oberes Ende der Rohrleitung 51 ist über dem jeweiligen Hohlraum 18 durch eine horizontal gerichtete Verbindungsleitung 54 verbunden mit der Rohrleitung 50 des Vorlaufs im übernächsten Hohlraum 18 (Fig. 9). Dadurch wird die im gezeigten Ausführungsbeispiel erfolgende Reihenschaltung der Rohrleitungen 50 und 51 innerhalb des Wandelements 10 gebildet. Die aus dem letzten Hohlraum 18 austretende Rohrleitung 51 ist am oberen Ende versehen mit einer Ablaufleitung 55.

Die Zwischenleitungen 53 und die Verbindungsleitungen 54 verlaufen horizontal gerichtet in Längsrichtung des Wandelements 10. Dagegen verlaufen die Speiseleitung 52 und die Ablaufleitungen 55 zwar ebenfalls horizontal gerichtet, aber quer zur Längsrichtung des Wandelements 10. Die Speiseleitung 52 und die Ablaufleitungen 55 sind aus einer der Wandflächen des Wandelements 10 herausgeführt, und zwar im gezeigten Ausführungsbeispiel aus der vorderen Wandfläche 15. Die Speiseleitung 52 und die Ablaufleitung 55 können aber auch nur in der gegenüberliegende, hinteren Wandfläche 16 des Wandteils 17 herausgeführt sein. Denkbar ist es auch, die Speiseleitung 52 und die Ablaufleitung 55 aus verschiedenen Wandflächen 15, 16 herauszuführen.

Die Speiseleitung 52, die Verbindungsleitung 54 und die Ablaufleitung 55 sind in einem Freiraum 23 im Bereich des oberen Querrandes 14 des Wandelements 10 angeordnet. Dieser Freiraum 23 ist begrenzt durch gegenüberliegende Querrandbereiche 56, einen diese an der vorderen Wandfläche 15 verbindenden Längsrandbereich 57 und eine der hinteren Wandfläche 16 zugeordnete Aufkantung 58, deren gegenüberliegende Enden mit Abstand von den Querrandbereichen 56 enden und dadurch Freiräume 59 zum seitlichen Austritt der Enden der Speiseleitung 52 und der Ablaufleitung 55 aus dem Bereich des Wandelements 10 bilden. Der Freiraum 23 wird nach dem Einsetzen der Klimatisierungseinrichtung in das Wandteil 17 vergossen, wie das weiter oben im Zusammenhang mit den früher beschriebenen Ausführungsbeispielen erläutert worden ist. Dabei dienen die Querrandbereiche 56, der Längsrandbereich 56 und die Aufkantung 58 als Schalung für die Ausgußmasse zum Verschließen der Freiräume 23 und 59.

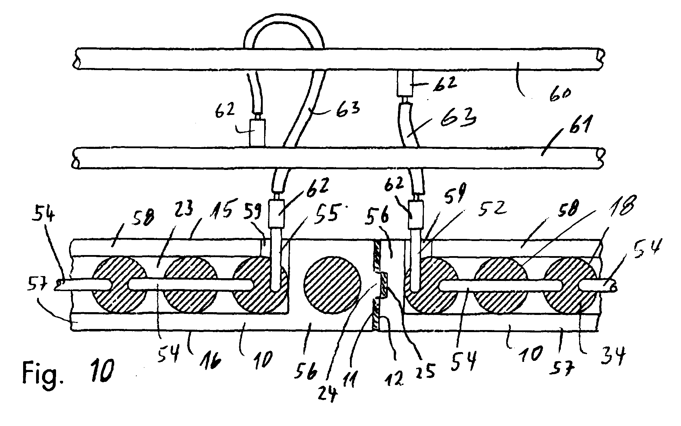

Die Fig. 10 zeigt den Anschluß zweier Wandelemente 10 an Leitungen zur Zuführung und zur Abführung eines Klimatisierungsmediums für die Klimatisierungseinrichtung. Demnach sind eine Vorlaufleitung 60 und eine Rücklaufleitung 61 vorgesehen. Sie verlaufen neben der aus den Wandelementen 10 gebildeten Wand. Im gezeigten Ausführungsbeispiel verlaufen die Vorlaufleitung 60 und die Rücklaufleitung 61 parallel zueinander und auch parallel zur Ebene der aus den Wandelementen 10 gebildeten Wand, und zwar horizontal gerichtet. Die Vorlaufleitung 60 und die Rücklaufleitung 61 sind vorzugsweise etwa in der Höhe der Speiseleitung 52 und der Ablaufleitung 55 vorgesehen, befinden sich demnach im Bereich des oberen Querrandes 14 des jeweiligen Wandelements 10. Die Vorlaufleitung 60 und die Rücklaufleitung 61 können aber auch beliebige andere Verläufe aufweisen. Konkret sind die Verläufe der Vorlaufleitung 60 und der Rücklaufleitung 61 den örtlichen Gegebenheiten anzupassen. Beispielsweise können die Vorlaufleitung 60 und die Rücklaufleitung 61 im Bereich einer Zwischendecke oder einer Deckenverkleidung unterhalb der statisch tragenden Decke angeordnet sein. In diesem Falle treten die Speiseleitung 52 und die Ablaufleitungen 55 aus den vorderen Wandflächen 15 der Wandelemente 10 heraus. Diese liegen dann zusammen mit der Versorgung der Wandelemente 10 mit einem Wärmeträgermedium verdeckt im Zwischenraum zwischen der tragenden Decke und einer abgehängten Decke.

Durch entsprechende Anschlüsse 62 sind die Speiseleitung 52 jedes Wandelements 10 mit der Vorlaufleitung 60 und die Ablaufleitungen 55 mit der Rücklaufleitung 61 verbunden, und zwar über entsprechende Verbindungsschläuche 63. Es sind auch Verbindungsrohre denkbar. Ebenso können die aus den Wandelementen 10 herausragenden Speiseleitungen 52 und Ablaufleitungen 55 auch direkt mit der Vorlaufleitung 60 bzw. Rücklaufleitung 61 verbunden sein durch Löten oder dergleichen.

Dadurch, dass die Speiseleitung 52 jedes Wandelements 10 mit der Vorlaufleitung 60 und die Ablaufleitung 55 jedes Wandelements 10 mit der Rücklaufleitung 61 verbunden ist, sind die Wandelemente 10 hinsichtlich ihrer Versorgung mit einem Energieträger und der Abfuhr des Energieträgers strömungstechnisch parallel geschaltet, während die Rohrleitungen 50 und 51 innerhalb des jeweiligen Wandelements 10 in Reihe geschaltet sind.

### Bezugszeichenliste:

- 10: Wandelement
- 11: Längsrand (rechts)
- 12: Längsrand (links)
- 13: Querrand (unten)
- 14: Querrand (oben)
- 15: Wandfläche (vorn)
- 16: Wandfläche (hinten)
- 17: Wandteil
- 18: Hohlraum
- 19: Zwischenebene
- 20: Aufkantung
- 21: Innenwandung
- 22: Querrandbereich
- 23: Freiraum
- 24: Feder
- 25: Nut
- 26: Rohrleitung (Vorlauf)
- 27: Rohrleitung (Rücklauf)
- 28: Verbindungsleitung (Vorlauf)
- 29: Verbindungsleitung (Rücklauf)
- 30: Bypaßleitung (Vorlauf)
- 31: Bypaßleitung (Rücklauf)
- 32: Zwischenleitung
- 33: Endbereich
- 34: Innenmantel
- 35: Rohrleitung
- 36: Trennwand
- 37: Strömungskanal (Vorlauf)
- 38: Strömungskanal (Rücklauf)
- 39: Innenmantel
- 40: Anschlußstelle
- 41: Anschlußstelle
- 42: Abzweigstelle
- 43: Abzweigstelle
- 44: offenes Ende
- 45: offenes Ende
- 46: Schaltelement
- 47: Schaltelement
- 48: Steckmuffe
- 49: Querrandfüllung
- 50: Rohrleitung (Vorlauf)
- 51: Rohrleitung (Rücklauf)
- 52: Speiseleitung
- 53: Zwischenleitung
- 54: Verbindungsleitung
- 55: Ablaufleitung
- 56: Querrandbereich
- 57: Längsrandbereich
- 58: Aufkantung
- 59: Freiraum
- 60: Vorlaufleitung
- 61: Rücklaufleitung
- 62: Anschluß
- 63: Verbindungsschlauch

## Patentansprüche

1. Bauelement, insbesondere Wandelement (10), zur Klimatisierung von Räumen mit einem kanalartige Hohlräume (18) aufweisenden Wandteil (17) und Rohrleitungen (26, 27; 35) für ein als ein Wärmeträgermedium dienendes Fluid, **dadurch gekennzeichnet**, daß die Rohrleitungen (26, 27; 35) durch die Hohlräume (18) des Wandteils (17) geführt und in den Hohlräumen (18) eingebettet sind.

2. Bauelement nach Anspruch 1, **dadurch gekennzeichnet**, daß die oder jede Rohrleitung (26, 27; 35) in den Hohlräumen (18) von einer Umhüllung, insbesondere einem Innenmantel (34; 39), umgeben ist, vorzugsweise zur Bildung der jeweiligen Umhüllung (Innenmäntel 34; 39) die von der oder jeder Rohrleitung (26, 27; 35) unausgefüllten Bereiche mindestens teilweise, vorzugsweise vollständig, von einem Füllmaterial ausgefüllt sind.

3. Bauelement nach einem der vorhergehenden Ansprüche, **dadurch gekennzeichnet**, daß mindestens einigen Hohlräumen (18), vorzugsweise allen Hohlräumen (18) oder jedem zweiten Hohlraum (18), insbesondere zwei parallel verlaufende Rohrleitungen (26, 27) oder Strömungskanäle (37, 38) zugeordnet sind.

4. Bauelement nach einem der vorhergehenden Ansprüche, **dadurch gekennzeichnet**, daß die Rohrleitungen (26, 27; 35) im jeweiligen Hohlraum (18) gleichzeitig umhüllt sind, insbesondere vom gleichen Innenmantel (34) umgeben sind, wobei die Innenmäntel (34) vom Füllmaterial in den von den Rohrleitungen (26, 21; 35) freigelassenen Bereichen der Hohlräume (18) gebildet sind.

5. Bauelement nach einem der vorhergehenden Ansprüche, **dadurch gekennzeichnet**, daß mehrere Hohlräume (18) mit Abstand parallel verlaufend im Wandteil (17) angeordnet sind, wobei die Hohlräume (18) sich vorzugsweise durchgehend in Längsrichtung des Wandteils (17) erstrecken.

6. Bauelement nach einem der vorhergehenden Ansprüche, **dadurch gekennzeichnet**, daß die Rohrleitungen (26, 27; 35) längs durch die Hohlräume (18) verlaufen, sich vorzugsweise längs durch im wesentlichen die gesamte Länge des jeweiligen Hohlraums (18) erstrecken.

7. Bauelement nach einem der vorhergehenden Ansprüche, **dadurch gekennzeichnet**, daß die Rohrleitungen (26, 27) im jeweiligen Hohlraum (18) bzw. die getrennten Strömungskanäle (37, 38) eine Rohrleitung (35) im Bereich eines vorzugsweise unteren Endes des jeweiligen Hohlraums (18) miteinander verbunden sind.

8. Bauelement, insbesondere Wandelement (10), zur Klimatisierung von Räumen, mit einem Wandteil (17) und einer dem Wandteil (17) zugeordneten Klimatisierungseinrichtung, insbesondere nach einem der übrigen Ansprüche, **dadurch gekennzeichnet**, daß die Klimatisierungseinrichtung aus einer vorgefertigten Einheit mit in kanalartigen Hohlräumen (18) im Wandteil (17) verlaufenden Rohrleitungen (26, 27; 35) gebildet ist.

9. Bauelement nach einem der vorhergehenden Ansprüche, **dadurch gekennzeichnet**, daß freien Enden jeweils der Rohrleitungen (26, 27) jedes Hohlraums (18) eine eigene Verbindungsleitung (28, 29) zugeordnet ist.

10. Bauelement nach einem der vorhergehenden Ansprüche, **dadurch gekennzeichnet**, daß die Rohrleitungen (26, 27; 35) mit aus einer offenen Stirnseite der Hohlräume (18) herausragenden Enden an den Verbindungsleitungen (28, 29) angeschlossen sind, und die Verbindungsleitungen (28, 29) vorzugsweise quer zu den Rohrleitungen (26, 27) verlaufen.

11. Bauelement nach einem der vorhergehenden Ansprüche, **dadurch gekennzeichnet**, daß die Hohlräume (18) mit Abstand vor einem Querrand (14) des Wandteils (17) enden und im Bereich dieses Querrandes (Querrandbereich 22) die Verbindungsleitungen (28, 29) angeordnet sind, wobei die Verbindungsleitung (28, 29) wenigstens zum Teil im Bereich des Querrandes (Querrandbereich 22) des Wandteils (17) in einem Füllmaterial eingebettet sind.

12. Bauelement nach einem der vorhergehenden Ansprüche, **dadurch gekennzeichnet**, daß beidseitig offene Enden (44, 45) der Verbindungsleitungen (28, 29) von gegenüberliegenden Längsrändern (11, 12) des Wandteils (17) frei zugänglich sind oder aus einer Wandfläche (15 bzw. 16) des Wandteils (17) herausragen.

13. Bauelement nach einem der vorhergehenden Ansprüche, **dadurch gekennzeichnet**, daß mindestens ein offenes Ende (44) jeder Verbindungsleitung (28, 29) mit einem Verbindungselement zum Anschluß an die korrespondierende Verbindungsleitung (28, 29) des benachbarten Wandteils (17) versehen ist.

14. Bauelement nach einem der vorhergehenden Ansprüche, **dadurch gekennzeichnet**, daß ein Längsrand (11) des Wandteils (17) einen mittigen Vorsprung (Feder 24) und der andere Längsrand (12) des Wandteils (17) eine mittige Vertiefung (Nut 25) aufweist, wobei der Vorsprung (Feder 24) korrespondierend zur Vertiefung (Nut 25) ausgebildet ist und ein an ein offenes Ende (45) jeder Verbindungsleitung (28, 29) angrenzender Bereich der Verbindungsleitung (28, 29) freiliegend in die Vertiefung (Nut 25) hineinragt.

15. Bauelement, insbesondere Wandelement (10), zur Klimatisierung von Räumen, mit einem kanalartige Hohlräume (18) aufweisenden Wandteil (17) und Rohrleitungen (26, 27; 35) für ein als Energieträger dienendes, strömendes Fluid, insbesondere nach einem der übrigen Ansprüche, **dadurch gekennzeichnet**, daß die Rohrleitungen (28, 29; 35) an Verbindungsleitungen (28, 29) angeschlossen sind und mindestens einer Verbindungsleitung (28 bzw. 29), vorzugsweise jeder Verbindungsleitung (28, 29), eine Bypaßleitung (30 bzw. 31) zugeordnet ist.

16. Bauelement nach einem der vorhergehenden Ansprüche, **dadurch gekennzeichnet**, daß die jeweilige Bypaßleitung (30, 31) an vorzugsweise allen Anschlußstellen (40, 41) der Rohrleitungen (26, 27; 35) an die entsprechende Verbindungsleitung (28, 29) vorbeigeführt ist, und vorzugsweise jede Bypaßleitung (30, 31) an gegenüberliegenden Endbereichen derjenigen Verbindungsleitung (28, 29), der sie zugeordnet ist, angeschlossen ist.

17. Bauelement nach einem der vorhergehenden Ansprüche, **dadurch gekennzeichnet**, daß an den Anschlußstellen der Bypaßleitungen (30, 31) an die Verbindungsleitungen (28, 29) Schaltelemente (46, 47), insbesondere Mehrwegeventile, angeordnet sind.
